# EUROPÄISCHE PATENTSCHRIFT

(11) **EP 2 334 480 B1**
(45) Veröffentlichungstag und Bekanntmachung des Hinweises auf die Patenterteilung: **12.12.2012**
(21) Anmeldenummer: 09740060.0
(22) Anmeldetag: 12.10.2009
(51) Int. Cl.: B21J 15/02, B21J 15/10, B23P 19/00, B27F 7/13, B21J 15/32

(54) **KOPFSTÜCK FÜR EIN SETZGERÄT**
HEAD PIECE FOR A PLACEMENT DEVICE
EMBOUT POUR APPAREIL DE POSE

(30) Priorität: 13.10.2008 DE 102008051488
(43) Veröffentlichungstag der Anmeldung: 22.06.2011
(73) Patentinhaber: Böllhoff Verbindungstechnik GmbH, 33649 Bielefeld (DE)
(72) Erfinder: DRAHT, Torsten, 33758 Schloss Holte (DE); HAESLER, Bernd, 33790 Halle/Westfahlen (DE); LÖSCHNER, Carsten, 33175 Bad Lippspringe (DE); SPILLER-BOHNENKAMP, Iris, 33649 Bielefeld (DE); STEINIG, Marc, 33184 Altenbeken (DE)
(74) Vertreter: Heyer, Volker
(86) Internationale Anmeldenummer: PCT/EP2009/007325
(87) Internationale Veröffentlichungsnummer: WO 2010/043363

(56) Entgegenhaltungen:
- EP-A1- 0 567 240
- AU-B2- 689 457
- US-A- 2 890 913
- US-A- 3 275 047

## Beschreibung

### 1. Gebiet der Erfindung

Die vorliegende Erfindung betrifft ein Kopfstück für ein Setzgerät gemäß dem Oberbegriff des Anspruchs 1, sowie ein mit diesem Kopfstück ausgestattetes Setzgerät, insbesondere zum Fügen eines Setzbolzens oder eines Stanzniets.

### 2. Hintergrund der Erfindung

Im Stand der Technik sind verschiedene Versionen von Kopfstücken für Setzgeräte bekannt. Derartige Kopfstücke enthalten den Fügekanal, durch den das Hilfsfügeteil mit Hilfe des Stempels des Setzgeräts gefügt wird. Beispiele für Hilfsfügeteile sind Setzbolzen oder Stanznieten.

Bevor das Hilfsfügeteil in einem Bauteil gesetzt wird, bewegt es sich durch den Fügekanal im Kopfstück. Daher wird das Kopfstück beispielsweise zum Abbremsen oder Positionieren des Hilfsfügeteils genutzt, damit dieses optimal durch den Stempel des Setzgeräts gesetzt werden kann. Zu diesem Zweck ist aus der DE 297 19 744U1 eine Bremsstrecke bekannt, die sich aus zwei Halbschalen zusammensetzt. Diese Halbschalen bilden einen Teil des Fügekanals. Diese Halbschalen sind an ihrem einen Ende schwenkbar befestigt und an ihrem anderen Ende miteinander über Federringe verbunden, so dass ein sich durch den Fügekanal bewegendes Hilfsfügeteil durch Reibung abgebremst wird. EP 0 746 431 B1 beschreibt ein Kopfstück, in dem federvorgespannte Kugeln in den Fügekanal ragen. An diesen Kugeln wird das Hilfsfügeteil festgehalten, so dass es dann aus dieser Halteposition durch den Stempel zum Setzvorgang mitgenommen werden kann. Diese Kugelanordnung hat den Nachteil, dass bei schnellen Setzbewegungen des Hilfsfügeteils diese Kugeln einer zu großen Beschleunigung ausgesetzt sind, was zu einem unwirtschaftlichen Verschleiß dieser Anordnung führt.

EP 0 387 430 A2 offenbart die Anordnung von mehreren hülsenartigen Elementen, deren federnde Finger den Fügekanal verengen. Diese federnden Finger fangen ein ankommendes Hilfsfügeteil auf und positionieren es, damit es später durch den Stempel des Setzgeräts mitnehmbar ist. DE 197 04 480 A1 beschreibt ebenfalls die Anordnung einer Kugelkonstruktion im Fügekanal, um die Bewegung der Hilfsfügeteile im Fügekanal zu beeinflussen. Auch hierfür gelten die bereits oben beschriebenen Nachteile.

DE 10 2008 018 428 beschreibt einen Fügekanal mit Bremsstrecke. Diese Bremsstrecke besteht aus mehreren sich in Längsrichtung des Fügekanals erstreckenden Stegen, die federvorgespannt in den Fügekanal ragen. Diese Bremsstrecke fängt ein lose dem Setzgerät oder Fügekanal zugeführtes Hilfsfügeteil auf, um dann durch den Stempel des Setzgeräts während des Setzvorgangs mitgenommen zu werden.

AU-B-58292/94 offenbart ein Setzgerät sowie ein Kopfstück eines Setzgeräts, das mit einem Fügekanal ausgestattet ist. Kugeln oder langgestreckte Stege werden mithilfe von federnden Kunststoffblöcken an unterschiedlichen Stellen oder über unterschiedliche Bereiche in das innere des Fügekanals gedrückt. Sie verengen auf diese Weise federnd den Hohlraum im Fügekanal, durch den ein zu setzender Stanzniet hindurch bewegt werden muss.

Es ist die Aufgabe vorliegender Erfindung, ein Kopfstück für ein Setzgerät sowie ein Setzgerät mit diesem Kopfstück bereitzustellen, das sowohl das Positionieren des Hilfsfügeteils unterhalb des Stempels des Setzgeräts wie auch eine optimale Zufuhr des Hilfsfügeteils zur Fügestelle unterstützt.

### 3. Zusammenfassung der Erfindung

Die obige Aufgabe wird durch ein Kopfstück gemäß dem unabhängigen Patentanspruch 1 und , durch ein Setzgerät gemäß dem unabhängigen Patentanspruch 8 gelöst.

Das erfindungsgemäße Kopfstück für ein Setzgerät umfasst einen Fügekanal, der sich in Längsrichtung des Kopfstücks erstreckt. Das Kopfstück weist die folgenden Merkmale auf: einen inneren Hohlzylinder, in dem der Fügekanal verläuft, eine Mehrzahl von Bremsstegen, die bewegbar und federvorgespannt radial in den Fügekanal ragen, und ein Mantelrohr, das den inneren Hohlzylinder derart umgibt, dass Federn zum Vorspannen der Bremsstege zwischen innerem Hohlzylinder und Mantelrohr gehalten werden.

Die vorliegende Erfindung liefert eine kompakte Konstruktion eines Kopfstücks mit Bremsstrecke. Diese Bremsstrecke besteht aus in das Innere des Fügekanals federvorgespannte Bremsstege, die durch eine spezielle Federanordnung vorgespannt und gehalten werden. Die Federn zum Vorspannen der Bremsstege sind zwischen der Aussenwand des inneren Hohlzylinders und dem Mantelrohr des Kopfstücks angeordnet und geklemmt. Dies liefert neben einer zusätzlichen Stabilität des Kopfstücks auch ein angepasstes Federverhalten der eingeklemmten Federn, da diese nicht nach Belieben in einen freien Raum ausweichen können. Stattdessen wird das Ausweichen der Federn bei mechanischer Belastung durch das klemmende Mantelrohr eingeschränkt. Dies wirkt sich gerade positiv beim Hochgeschwindigkeitsfügen von Hilfsfügeteilen aus, da ein federndes Abprallen des Hilfsfügeteils von den Bremsstegen reduziert wird.

Zur vorteilhaften Ausgestaltung des Kopfstücks sind die Federn derart konfiguriert, dass der Bremssteg gedämpft auslenkbar und verzögert in seine Ausgangsposition zurückstellbar ist. Auf diese Weise nimmt die Feder zunächst einen lateralen Stoß eines Setzbolzens und dessen Energie auf und gibt diese Energie im Vergleich zu einer Standardstahlfeder zeitverzögert zurück. Daraus folgt, dass der Bremssteg nicht sofort in seine Ausgangsposition zurückfedert, sondern in diese zeitlich verzögert zurückkehrt. Gemäß einer weiteren Ausführungsform sind die Federn des Kopfstücks derart konfiguriert, dass der Bremssteg mit einer progressiven Federkennlinie auslenkbar und gedämpft in seine Ausgangsposition zurückstellbar ist. Daraus folgt, dass der ausgelenkte Bremssteg während seiner radial nach außen gerichteten Bewegung eine zunehmende Federkraft als Gegenkraft erfährt. Die Rückstellung des Bremsstegs findet gedämpft statt, so dass der Bremssteg nicht sofort in den Fügekanal zurückfedert. Auf diese Weise wird die vom Setzbolzen durch den Bremssteg aufgenommene Energie verzögert an den Setzbolzen zurückgegeben. Das hier beschriebene Federverhalten wird vorzugsweise für alle hier beschriebenen Federkonfigurationen realisiert, d.h. für die Federn oder O-Ringe in gleicher Weise wie für die mit einer Dämpfungsschicht abgefederten Kanalsegmente (siehe unten).

Gemäß einer bevorzugten Ausgestaltung des Kopfstücks weist der innere Hohlzylinder eine Mehrzahl in den Fügekanal mündender Kanäle auf, die über das Mantelrohr mit der Umgebung oder mit einer Druckluftquelle verbindbar sind.

Die in den Fügekanal mündenden Kanäle werden dazu benutzt, um einen gerichteten Luftstrom entgegen der Setzbewegung des Hilfsfügeteils im Fügekanal zu erzeugen. Dieser gerichtete Luftstrom wird entweder durch Absaugen von Luft aus dem Kopfstück vom Setzgerät aus oder durch Einblasen von Druckluft durch die Kanäle in den Fügekanal in Richtung des Setzgeräts erzeugt. Aufgrund dieses Luftstroms wird das Hilfsfügeteil gegen die Stempelstirnseite des Stempels des Setzgeräts gedrückt, so dass auf diese Weise ein Vorpositionieren des Hilfsfügeteils stattfindet. Beginnt der Stempel des Setzgeräts den Setzvorgang, wird das Hilfsfügeteil durch den Stempel mitgenommen, ohne dass das Hilfsfügeteil dieser Stempelbewegung vorauseilt. Auf diese Weise wird die Bewegung des Hilfsfügeteils während des Setzvorgangs kontrollierter durchgeführt.

Gemäß einer weiteren Ausgestaltung des vorliegenden Kopfstücks weist dieses ein Anschlussende zum Verbinden mit einem Setzgerät auf. Zudem sind seine Bremsstege jeweils in einer den inneren Hohlzylinder durchlaufenden Längsnut angeordnet und dort über in den Endbereichen der Bremsstege vorgesehenen Stifte befestigt. Gerade diese Art der Befestigung der Bremsstege gewährleistet einerseits ein freies Bewegen der Bremsstege in radialer Richtung und andererseits ausreichende mechanische Stabilität der Bremsstege innerhalb des Kopfstücks während der Setzbewegung des Stempels.

Gemäß das Ausführungsform der vorliegender Erfindung bestehen die in dem Kopfstück genutzten Federn aus Kunststoff- oder Gummi-O-Ringen, die zwischen Mantelrohr und Außenwand des inneren Hohlzylinders derart eingeklemmt sind, dass ihr Federverhalten im Vergleich zum ungeklemmten Zustand veränderbar ist.

Das gezielte Einklemmen der aus Kunststoff oder Gummi bestehenden O-Ringe reduziert das elastische Verhalten der federvorgespannten Bremsstege. Auf diese Weise wird ein Abprallen des Hilfsfügeteils während des Fügevorgangs reduziert, da das radiale Ausweichen und Zurückfedern der Bremsstege langsamer und mit einem größeren Energieverlust im Vergleich zu beispielsweise Stahlfedern erfolgt.

Es ist weiterhin bevorzugt, mehrere O-Ringe zu Federpaketen zusammenzufassen, so dass die Bremsstege mit drei gleichmäßig beabstandeten Federpaketen gehalten sind.

Ein weiteres, das nicht unter den Schutzanspruch der Ansprüche tällt, Kopfstück für ein Setzgerät mit Fügekanal weist die folgenden Merkmale auf: ein Mantelrohr, einen inneren Hohlzylinder, in dem der Fügekanal verläuft und der durch eine Mehrzahl von in Längsrichtung unterteilten Kanalsegmenten gebildet wird, und eine Dämpfungsschicht, die zwischen dem inneren Hohlzylinder und dem Mantelrohr angeordnet ist, so dass die Kanalsegmente in radialer Richtung gedämpft und zurückstellbar abgefedert bewegbar sind.

Im Vergleich zu den zuvor diskutierten Bremsstegen gewährleisten die Kanalsegmente ein Abstützen des Hilfsfügeteils an beliebiger und sich auch ändernder Stelle innerhalb des Fügekanals während des Setzvorgangs. Dies verringert beispielsweise Abnutzung von Hilfsfügeteil und Kanalsegment während der Setzvorgänge. Ein weiterer Vorteil besteht in der flächig angeordneten Dämpfungsschicht, an der sich die einzelnen Kanalsegmente abstützen. Aufgrund der flächigen Anordnung dieser Dämpfungsschicht wird nicht nur ein radiales Ausweichen der Kanalsegmente abgefedert, sondern es werden die Kanalsegmente dreidimensional durch diese Dämpfungsschicht unterstützt.

Es ist bevorzugt, die Kanalsegmente aus abriebfestem Material herzustellen, vorzugsweise aus Kunststoff, gehärtetem Stahl oder Keramik. Zudem besteht gemäß einer Ausführungsform die Dämpfungsschicht aus Kunststoff, vorzugsweise einem Elastomer. Es ist weiterhin bevorzugt, den inneren Hohlzylinder in drei bis fünf Kanalsegmente zu unterteilen, die hängend oder stehend im Kopfstück gelagert sind.

Die vorliegende Erfindung offenbart zudem ein Setzgerät für ein Hilfsfügeteil, insbesondere ein Setzbolzen oder ein Stanzniet, mit einem angetriebenen Stempel, der für eine Setzbewegung in einen Fügekanal bewegbar ist, dem das Hilfsfügeteil lose zuführbar ist. Das Setzgerät weist die folgenden Merkmale auf: das erfindungsgemäße und eine Ansauganordnung mit einem Ansaugkanal, der angrenzend an die das Hilfsfügeteil bewegende Stempelstimseite in den Fügekanal des Setzgerätes mündet, so dass im Fügekanal über einen in der Ansaugvorrichtung generierbaren Unterdruck im Vergleich zum Atmosphärendruck ein Luftstrom in Richtung der das Hilfsfügeteil bewegenden Stempelstirnseite generierbar ist, mit dem das Hilfsfügeteil an der Stempelstirnseite positionierbar ist.

In vorliegendem Setzgerät wird das Hilfsfügeteil lose dem Fügekanal unterhalb der fügenden Stempelstirnseite zugeführt. Das Hilfsfügeteil befindet sich daher ohne Halt im Fügekanal und wird in diesem verharren oder sich bis zur Bremsstrecke bewegen. Um nun ein genaues Positionieren des Hilfsfügeteils an der fügenden Stempelstirnseite zu erzielen, wird ein gerichteter Luftstrom in Richtung der fügenden Stempelstirnseite innerhalb des Fügekanals erzeugt. Dieser Luftstrom ergibt sich aufgrund eines in einer Ansauganordnung erzeugten Unterdrucks der angrenzend an die fügende Stempelstirnseite die Luft aus dem Fügekanal saugt. Aufgrund dieses gerichteten Luftstroms wird das Hilfsfügeteil mit seinem Kopf gegen die fügende Stempelstirnseite gedrückt und in dieser Position gehalten. Somit ist das Hilfsfügeteil für den Setzvorgang passend positioniert und wird während der Setzbewegung durch den Stempel mitgenommen, ohne dem Stempel vorauszueilen. Dies erhöht die Kontrolle während des Setzvorgangs sowie die Qualität der erzeugten Fügeverbindungen im Vergleich zum Stand der Technik.

Zudem umfasst eine Ausführungsform ein Setzgerät mit den folgenden Merkmalen: das erfindungsgemäße Kopfstück, in dem ein Teil des Fügekanals verläuft, der eine Mehrzahl von in den Fügekanal mündenden Druckluftkanälen umfasst, und einen Abluftkanal, der angrenzend an die das Hilfsfügeteil bewegende Stempelstirnseite in den Fügekanal des Setzgeräts mündet, so dass im Fügekanal über einen in der Mehrzahl von Druckluftkanälen generierbaren Überdruck im Vergleich zum Atmosphärendruck ein Luftstrom in Richtung der das Hilfsfügeteil bewegenden Stempelstirnseite generierbar ist, mit dem das Hilfsfügeteil an der Stempelstirnseite positionierbar ist.

Mit dieser Ausgestaltung des Setzgeräts wird das Hilfsfügeteil nicht über einen durch Unterdruck erzeugten Luftstrom sondern durch einen mittels Überdruck im Vergleich zum Atmosphärendruck erzeugten gerichteten Luftstrom innerhalb des Fügekanals positioniert. Da die Richtung des Luftstroms und seine Wirkung die gleichen sind, wie sie oben bereits beschrieben worden sind, wird auf die obigen Ausführungen verwiesen. Die Art der Erzeugung des Luftstroms erfolgt hier auf andere Weise im Vergleich zu dem oben beschriebenen Setzgerät. Es wird eine Druckluftquelle an die Mehrzahl von Druckluftkanälen im Fügekanal bzw. Kopfstück angeschlossen. Auf dieser Grundlage ist Luft mit einem Überdruck im Vergleich zum Atmosphärendruck in den Fügekanal einblasbar, die durch einen entsprechenden Abluftkanal angrenzend an die fügende Stempelstirnseite wieder austreten kann. Mit diesem gerichteten Luftstrom ist das Hilfsfügeteil an der fügenden Stempelstirnseite in gleicher Weise positionierbar, wie es oben bereits beschrieben worden ist.

Gemäß einer bevorzugten Ausführungsform umfasst das Kopfstück mindestens vier, vorzugsweise fünf oder sechs dieser Bremsstege, die jeweils die gleiche Länge aufweisen sowie gleichmäßig beabstandet und konzentrisch um die Mitte des hohlzylindrischen Kanals angeordnet sind.

Gemäß einer weiteren nicht erfindungsgemäßen Ausgestaltung der oben beschriebener Setzgeräte umfassen diese einen Fügekanal im Kopfstück, dessen Durchmesser derart dimensioniert ist, dass sich zwischen maximalem Querschnitt des Hilfsfügeteils und einer Innenwand des Fügekanals ein Spalt von 0,1 bis 0,5 mm ergibt. Basierend auf dieser Dimensionierung ergibt sich eine Spaltbreite zwischen Hilfsfügeteil und Innenwand des Fügekanals von 0,1 bis 0,5 mm. Dieses geringe Spaltmaß ermöglicht es, dass ein Hilfsfügeteil in einem Kopfstück allein durch einen gerichteten Luftstrom erzeugt mittels Ansaugvorrichtung oder Druckluftanschluss positioniert und/oder abgebremst wird. Bei dieser Konfiguration ist es daher nicht erforderlich, eine zusätzliche Bremsstrecke innerhalb des Kopfstücks mit geringem Spaltmaß vorzusehen, was aber optional ebenfalls realisierbar ist. Die Federn im Kopfstück des Setzgeräts sind derart konfiguriert, dass die Bremsstege mit einer progressiven Federkennlinie auslenkbar und gedämpft in seine Ausgangsposition zurückstellbar ist, wie es oben bereits erläutert worden ist.

### 4. Beschreibung der begleitenden Zeichnung

Die bevorzugten Ausführungsformen vorliegender Erfindung werden unter Bezugnahme auf das nicht unter den schutzumfang des Anspruchs 1 gällt,
- Fig. 1: ein Setzgerät mit Kopfstück das nicht unter dem Schutzumfang des Anspruchs 1 fällt, und Bremsstrecke,
- Fig. 2: das Kopfstück aus Fig. 1 in einer Schnittdarstellung,
- Fig. 3: ein weiteres Setzgerät mit Kopfstück das nicht unter dem Schutzumfang des Anspruchs 1 fällt,
- Fig. 4: das Kopfstück aus Fig. 3 in einer Schnittdarstellung,
- Fig. 5: ein weiteres Setzgerät mit einem Kopfstück,
- Fig. 6: eine Schnittdarstellung des Kopfstücks aus Fig. 5,
- Fig. 7: eine perspektivische Außenansicht eines Teils des Kopfstücks aus Fig. 5,
- Fig. 8: die Bremsstege in einer perspektivischen Ansicht aus dem Kopfstück der Fig. 5,
- Fig. 9: eine weitere perspektivische Detailansicht des Kopfstücks aus Fig. 5,
- Fig. 10, 11: zwei weitere bevorzugte Ausführungsformen eines Kopfstücks das nicht unter dem Schutzumfang des Anspruchs 1 fällt, für ein Setzgerät.

### 5. Detaillierte Beschreibung der bevorzugten Ausführungsformen

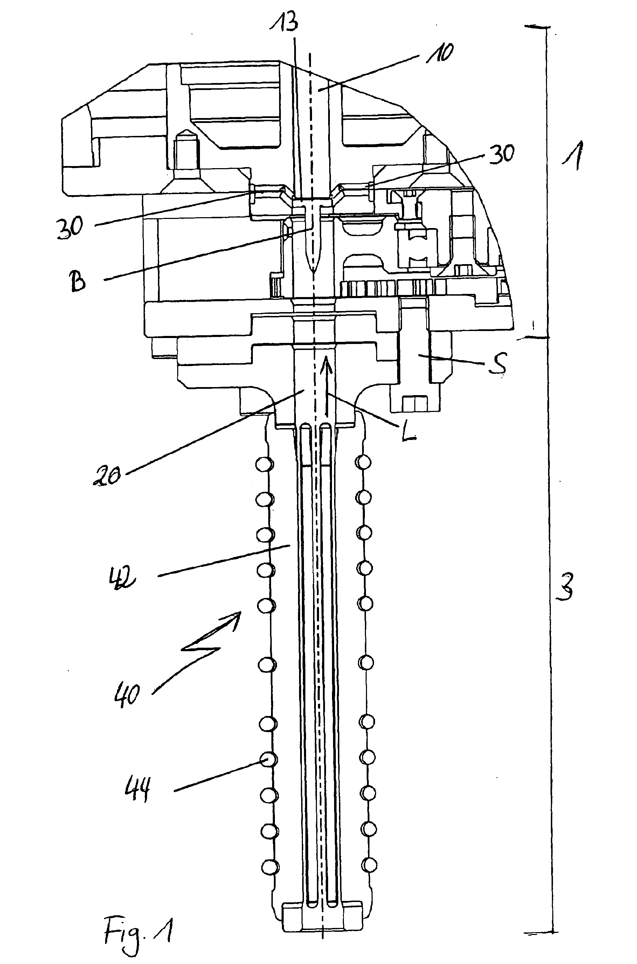

Die vorliegende Erfindung beschreibt ein Setzgerät 1 zum Fügen von Hilfsfügeteilen B, wie beispielsweise ein Setzbolzen oder ein Stanzniet. Dies ist in einem Ausschnitt in Fig. 1 dargestellt. Das Hilfsfügeteil B wird über einen angetriebenen Stempel 10 und im Speziellen dessen fügende Stempelstirnseite 13 beschleunigt und in ein Bauteil (nicht gezeigt) gefügt. Zu diesem Zweck wird das Hilfsfügeteil B, das im Weiteren als Setzbolzen B bezeichnet wird, lose einem Fügekanal 20 zugeführt, durch den sich der Stempel 10 bewegt. Eine lose Zufuhr des Setzbolzens B bedeutet, dass dieser nicht mehr durch ein Tape oder dergleichen gehalten ist, sondern lose im Fügekanal 20 vorliegt. Der Fügekanal 20 erstreckt sich teilweise im Setzgerät 1 und teilweise in einem Kopfstück 3.

Das Kopfstück 3, wie es im Weiteren noch in verschiedenen Konstruktionen beschrieben wird, realisiert allein und/oder in Kombination mit dem Setzgerät 1 eine Positionierung des Setzbolzens B an der den Setzbolzen bewegenden Stempelstirnseite 13. Dazu wird der Setzbolzen B durch einen auf die bewegende bzw. fügende Stempelstirnseite 13 zu gerichteten Luftstrom an dieser Stempelstirnseite 13 positioniert. Der Setzbolzen B liegt dadurch mit seiner dem Schaft abgewandten Seite des Kopfes an der Stempelstirnseite 13 an und wird dadurch passend ausgerichtet. Der Setzbolzen befindet sich dadurch in einer koaxialen Ausrichtung mit der Längsachse des Stempels 10 und der des Fügekanals 20 im Kopfstück 3. Dies entspricht der Ausrichtung des Setzbolzens wie bei der Nutzung eines Zuführtapes mit darin befestigten Setzbolzen. Vorteilhaft ist hierbei, dass diese Positionierung auch bei loser Zufuhr des Setzbolzens realisierbar ist, während das Setzgerät 1 in einer Normalposition wie auch in einem Überkopfbetrieb eingesetzt werden könnte.

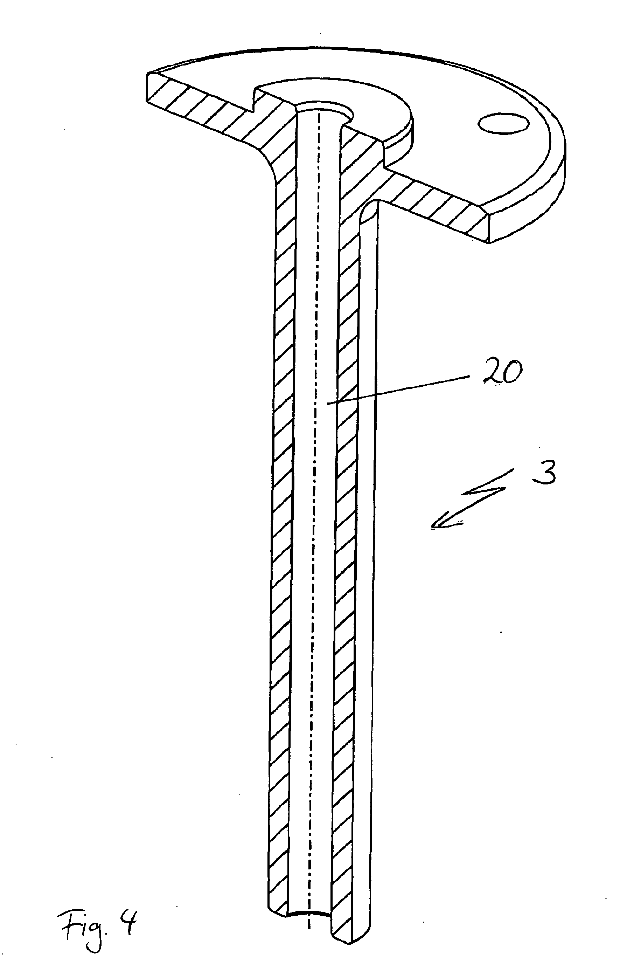

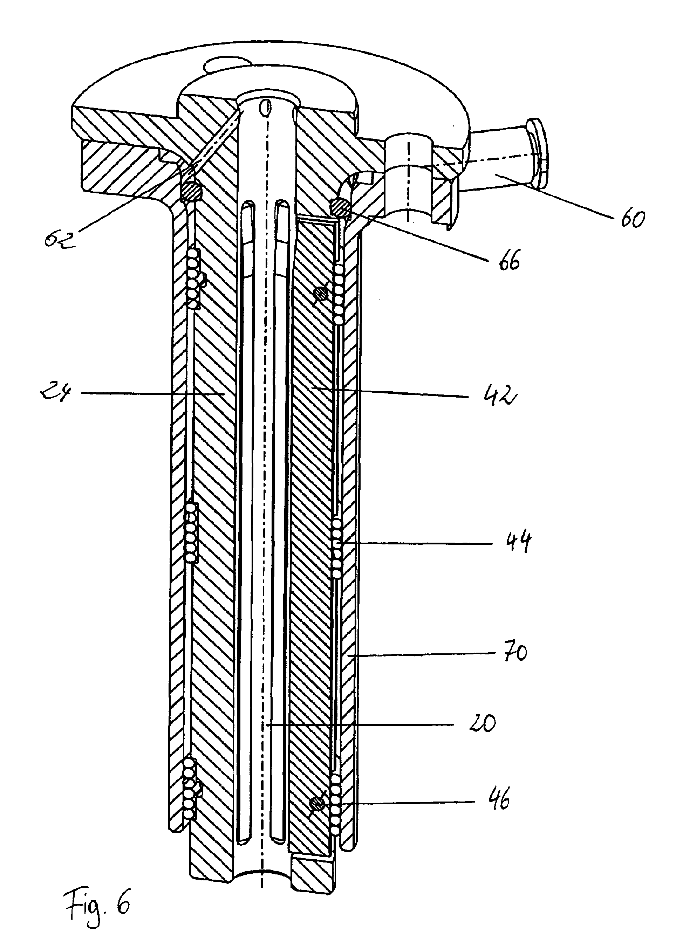

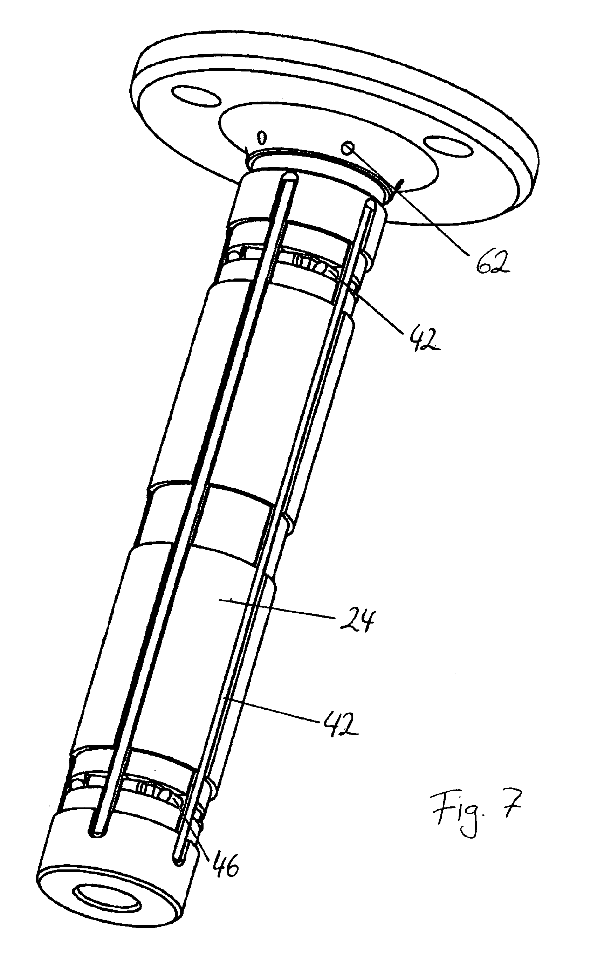

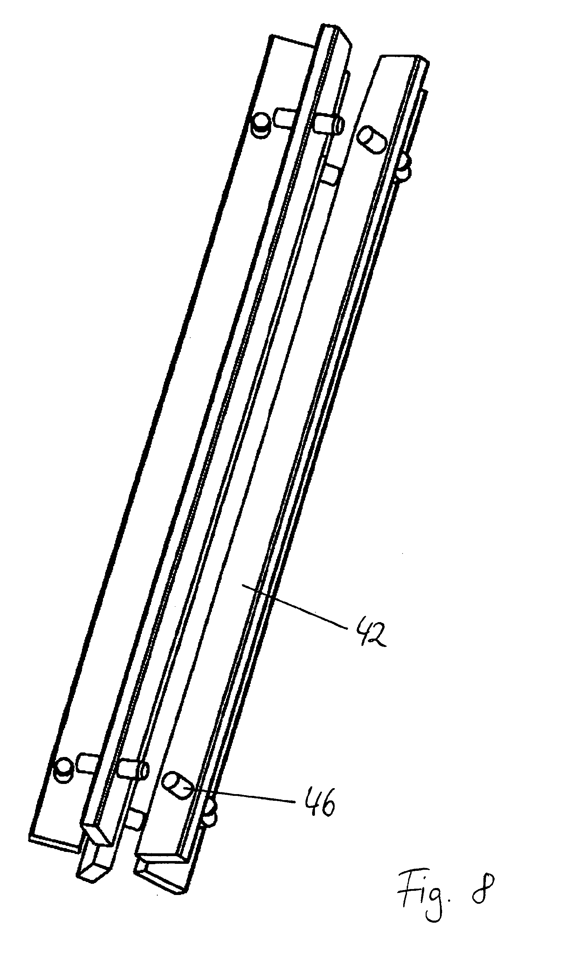

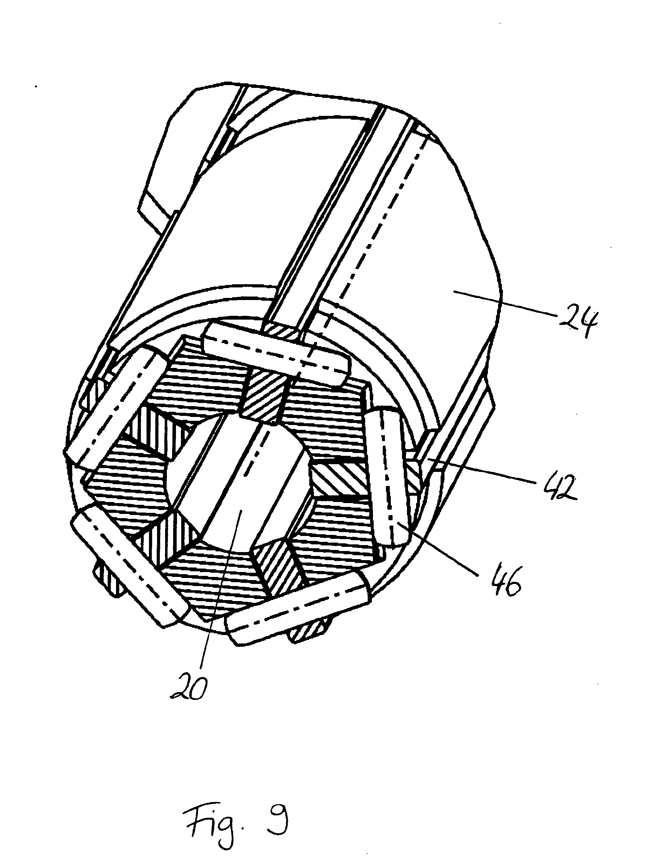

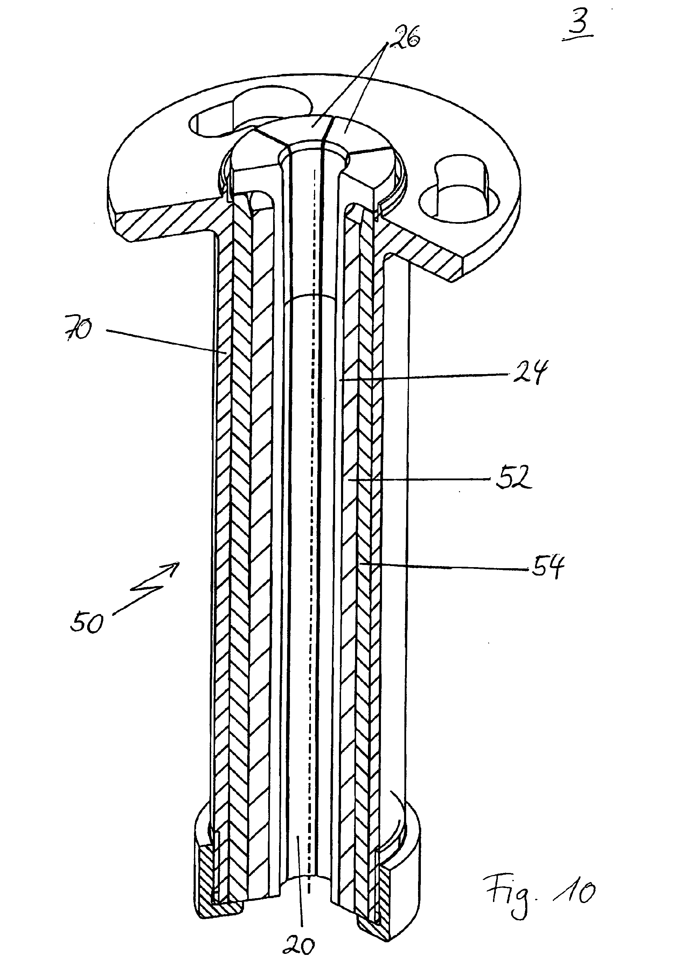

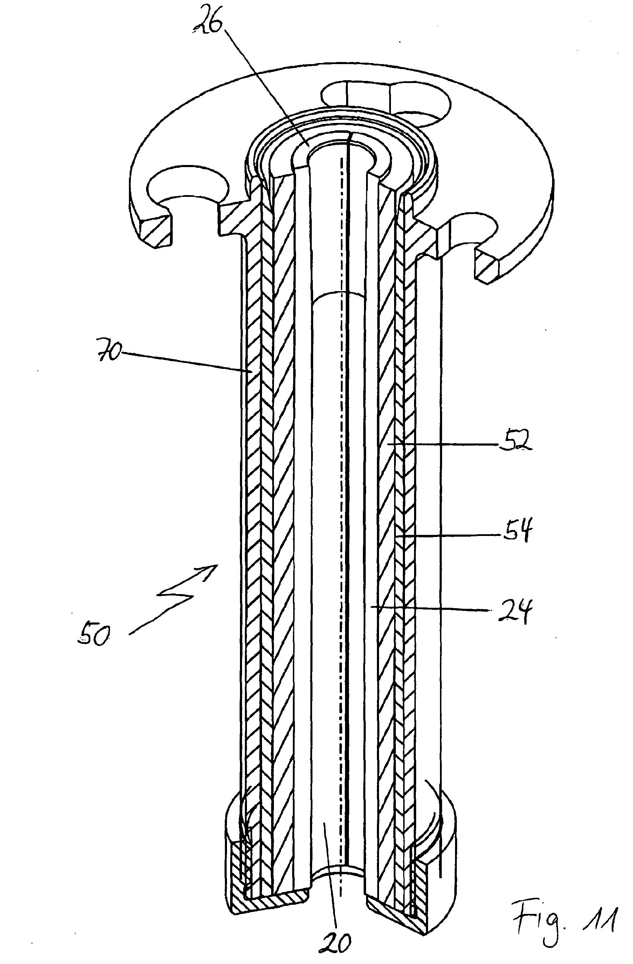

Um eine lagestabile Bewegung des Setzbolzens B durch den Fügekanal 20 des Kopfstücks 3 zu unterstützen, ist das Kopfstück optional mit einer Bremsstrecke 40; 50 ausgestattet wie sie unten näher erläutert ist. Die Bremsstrecke 40; 50 bremst den Setzbolzen B während seiner Bewegung durch den Fügekanal 20 derart ab, dass seine Anlage an der Stempelstirnseite 13 und damit die Ausrichtung des Setzbolzens zum Fügen unterstützt wird. Zu diesem Zweck sind Bremsstege 42 (vgl. Figuren 1 bis 9) oder Kanalsegmente 52 (vgl. Figuren 10, 11) des Fügekanals 20 im Kopfstück 3 radial nach innen in den Fügekanal 20 gedämpft federvorgespannt. Für ein verbessertes Abbremsen ist die jeweilige Bremsstrecke 40; 50 derart radial in den Fügekanal 20 vorgespannt, dass die Bremsstege 42 oder Kanalsegmente 52 durch einen ankommenden Setzbolzen B gedämpft radial nach außen bewegbar sind. Die Rückstellung der Bremsstege 42 oder der Kanalsegmente 52 in ihre Ausgangsposition erfolgt derart verzögert, dass der Setzbolzen B durch diese Rückstellbewegung keinen radial gerichteten Kraftstoß erhält. Gemäß einer diesbezüglich bevorzugten Ausführungsform sind die Federn des Kopfstücks oder des Setzgeräts mit einem bestimmten Kopfstück derart konfiguriert, dass die Mehrzahl von Bremsstegen oder Kanalsegmenten 52 mit einer progressiven Federkennlinie auslenkbar und gedämpft in ihre Ausgangsposition zurückstellbar ist. Zudem wird er durch die geneigte Ausrichtung des Bremsstegs 42 oder des Kanalsegments 52 zur Mitte des Fügekanals 20 geführt. Auf diese Weise werden Taumelbewegungen des Setzbolzens B beim Hochgeschwindigkeitsfügen reduziert. Zur konstruktiven Realisierung oben beschriebener Eigenschaften wird ein unten näher beschriebenes Mantelrohr eingesetzt. Ziel des Mantelrohrs ist es neben anderen Funktionen, die radiale Auslenkbewegung der Bremsstege, die gemäß einer Alternative durch Kunststoff-O-Ringe federvorgespannt sind, zu begrenzen. Mit Hilfe des Manterohrs erfolgt die Begrenzung der Auslenkbewegung mit geringem konstruktiven Aufwand, auf effektive Weise und ohne zeitliche Verzögerung. Zudem wird eine schwingungsgedämpfte Rückführung der Bremsstege in den Fügekanal aufgrund der Einfassung und der Anordnung der Kunststoff-O-Ringe zwischen Fügekanal und Mantelrohr gewährleistet, wodurch das Gesamtschwingen der Bremsstege minimiert wird.

Im Vergleich zu einem bekannten durchschnittlichen Federstahl wird hier eine gedämpfte und verzögert rückstellende Federvorspannung der Bremsstrecke 40; 50 eingesetzt. Dies ist durch verschiedene Konstruktionen realisiert, wie unten näher beschrieben ist.

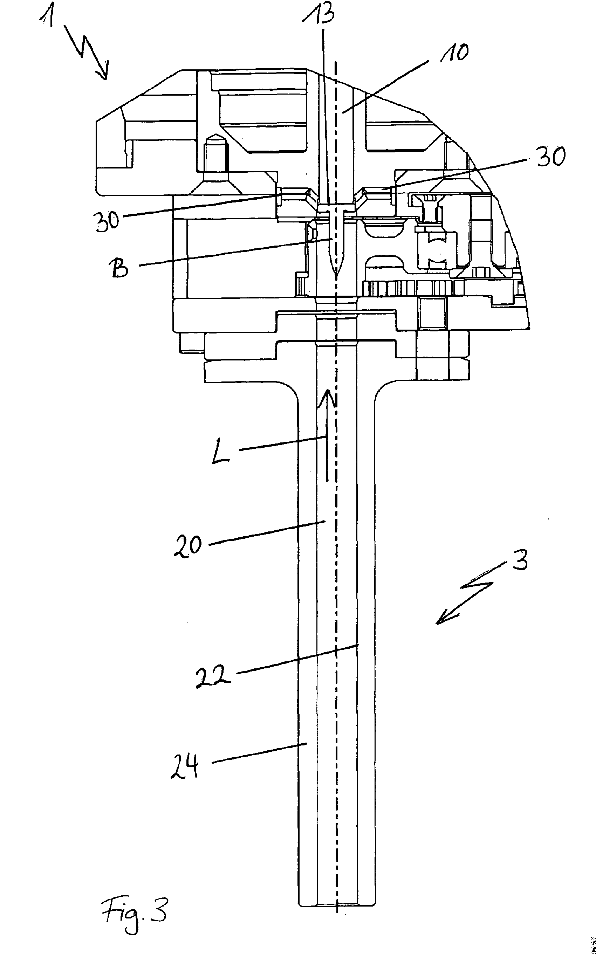

Fig. 3 zeigt das Setzgerät 1 mit Kopfstück 3 ohne Bremsstrecke. Der Innendurchmesser des Fügekanals 20 im Kopfstück 3 ist im Vergleich zum maximalen Querschnitt des Setzbolzens B derart dimensioniert, dass im Vergleich zum maximalen Querschnitt des Setzbolzens nur ein freier Spalt geringer Spaltbreite zwischen Setzbolzen B und Innenwand 22 des Fügekanals 20 entsteht. Die Spaltbreite erstreckt sich in einem Intervall zwischen 0,1 bis 0,5 mm. Vorzugsweise wird die Spaltbreite auf 0,2 bis 0,3 mm eingestellt. Aufgrund dieser Dimensionierung des Fügekanals 20 im Kopfstück 3 wird der Setzbolzen B eng in diesem Fügekanal 20 geführt. Zudem wird ein Ansaugen von Luft aus dem Fügekanal 20, wie es unten näher erläutert ist, unterstützt, da sich aufgrund der geringen Spaltbreite zwischen Stempelstirnseite 13 und Kopf des Setzbolzens B schneller ein Unterdruck ausbildet, als würde der Spalt eine größere Breite aufweisen.

Im Setzgerät 1 wird die Setzbolzen B lose dem Fügekanal 20 zugeführt. Dies erfolgt beispielsweise über eine Konstruktion, wie sie in der Patentanmeldung DE 10 2007 017 689 beschrieben ist. Der Setzbolzen wird somit oberhalb des Kopfstücks 3 dem Fügekanal 20 zugeführt. Es ist ebenfalls bevorzugt, den Setzbolzen B dem Fügekanal 20 im Kopfstück 3 zuzuführen.

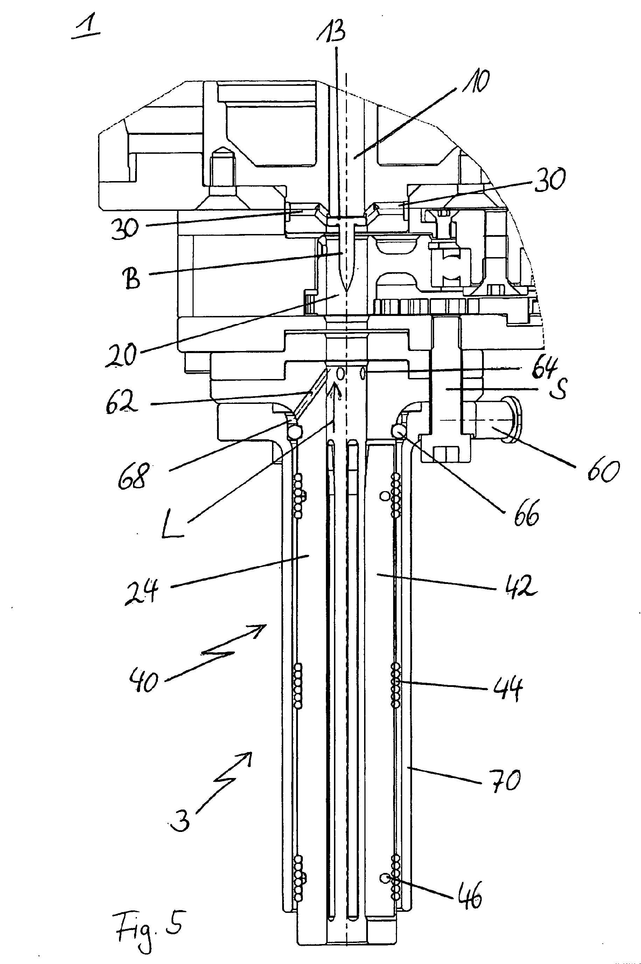

Das Setzgerät 1 umfasst einen Kanal 30, der angrenzend oder nahe der Stempelstirnseite 13 in den Fügekanal 20 mündet. Der Kanal 30 ist mit einer Ansaugvorrichtung (nicht gezeigt) verbunden. Die Ansaugvorrichtung erzeugt im Vergleich zum Atmosphärendruck einen Unterdruck, so dass über den Kanal 30, der hier als Ansaugkanal genutzt wird, Luft aus dem Fügekanal 20 gesaugt wird. Dies erzeugt einen gerichteten Luftstrom L innerhalb des Fügekanals 20, der auf die Stempelstirnseite 13 zu gerichtet ist. Über die Höhe des Unterdrucks ist die Stärke des Luftstroms L so einstellbar, dass der Setzbolzen B durch den Luftstrom gegen die Stempelstirnseite 13 gedrückt und dort positioniert wird. Das geringe Spaltmaß zwischen Setzbolzen und Innenwand des Fügekanals 20 (s. o.) unterstützt das Positionieren des Setzbolzens B an der Stempelstirnseite 13, weil die Luftzufuhr durch den Spalt zwischen Setzbolzen und Wand des Fügekanals 20 minimiert ist. Es ist ebenfalls bevorzugt, am dem Setzgerät 1 zugewandten Ende des Kopfstücks 3 Kanäle vorzusehen, die in den Fügekanal 20 münden. Beispielgebend ist dies in einer anderen Ausführungsform in Fig. 5 gezeigt, wo diese Kanäle mit dem Bezugszeichen 62 bezeichnet sind. Diese Kanäle werden mit einer Druckluftquelle verbunden, so dass Druckluft in dem Fügekanal 20 in Richtung der Stempelstirnseite 13 einblasbar ist. Durch das Einblasen von Luft in den Fügekanal 20 mit einem einstellbaren Überdruck im Vergleich zum Atmosphärendruck wird der Luftstrom L zum Positionieren des Setzbolzens B erzeugt bzw. ergänzt. Daher ist der Setzbolzen B ebenfalls durch ein kombiniertes Absaugen über den Kanal 30 und ein Einblasen von Druckluft über zusätzliche Kanäle in den Fügekanal 20 positionierbar.

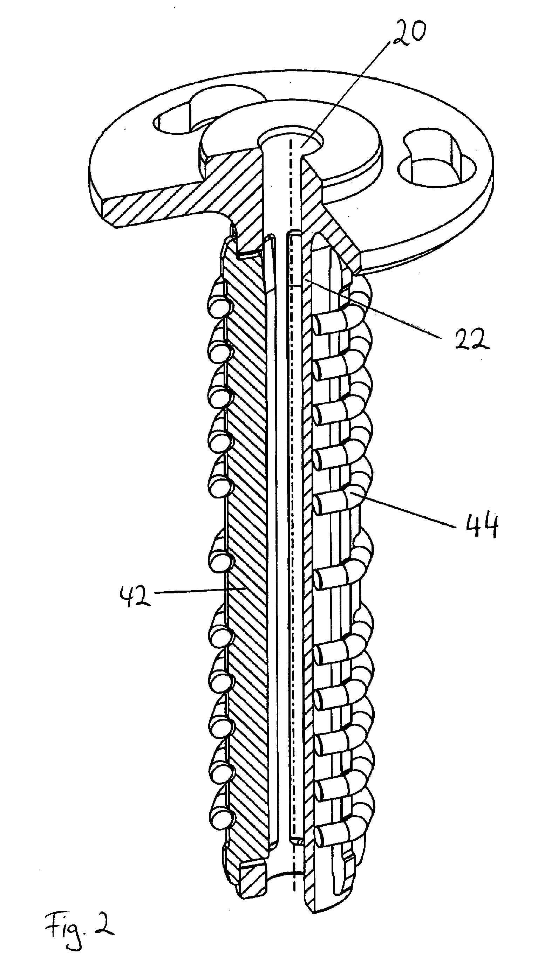

Die Figuren 1 und 2 zeigen eine nicht erfindungsgemäße Ausführungsform eines Setzgeräts 1 mit Kopfstück 3, das eine Bremsstrecke aufweist. Der Setzbolzen B wurde hier bereits lose dem Fügekanal 20 zugeführt. Über den Ansaugkanal 30, der mit der Ansaugvorrichtung (nicht gezeigt) verbunden ist, wird Luft aus dem Fügekanal 20 abgesaugt. Durch den erzeugten Unterdruck im Vergleich zum Atmosphärendruck wird der Luftstrom L im Fügekanal 20 erzeugt, der den Setzbolzen B an der Stempelstirnseite 13 positioniert.

Es ist ebenfalls bevorzugt, das Kopfstück 3 der Figuren 1 und 2 mit zusätzlichen Kanälen auszustatten, wie sie beispielsweise in Fig. 5 gezeigt und in diesem Zusammenhang beschrieben sind. Diese Kanäle gewährleisten den Zustrom von Druckluft in den Fügekanal 20, um mit einem darüber erzeugten Luftstrom L im Fügekanal 20 den Setzbolzen an der Stempelstirnseite 13 zu positionieren.

Das Kopfstück 3 umfasst einen Hohlzylinder 22, in dessen Inneren sich der Fügekanal 20 erstreckt. In Längsrichtung des Hohlzylinders 22 sind umfänglich gleichmäßig beabstandet mehrere Nuten ausgebildet, in denen einzeln Bremsstege 42 angeordnet sind. Diese Bremsstege 42 ragen radial in den Fügekanal 20 und verjüngen dadurch den Fügekanal 20. Die Bremsstege 42 sind über Federn 44 radial nach innen gerichtet federvorgespannt. Die Federn 44 sind vorzugsweise gleichmäßig voneinander beabstandet und über die gesamte Länge der Bremsstege verteilt. Gemäß einer bevorzugten Ausführungsform umfasst das Kopfstück 3 mindestens vier Bremsstege, die jeweils die gleiche Länge aufweisen und konzentrisch um die Mitte des Fügekanals 20 angeordnet sind. Für eine verbesserte Führung des Setzbolzens B im Fügekanal 20 ist es weiterhin bevorzugt, fünf oder sechs Bremsstege vorzusehen.

Die Bremsstege 42 des Kopfstücks 3 sind über die Federn 44 vorgespannt. Als Federn werden beispielsweise Spiralfedern, eine Mehrzahl von Federringen, vorzugsweise O-Ringe aus Kunststoff oder Gummi, sowie Wurmfedern genutzt. Gemäß einer weiteren bevorzugten Ausführungsform sind die Federn 44 derart konfiguriert, dass der Bremssteg 42 gedämpft radial nach außen auslenkbar ist und seine Rückstellung in seine Ausgangsposition verzögert erfolgt. Aufgrund dieses Federverhaltens, was beispielsweise mit Kunststoff-O-Ringen erzielbar ist, wird die seitliche Bewegung des Setzbolzens B im Fügekanal 20 gedämpft und es werden ihm keine neuen seitlichen radial nach innen gerichteten Stöße über zurückfedernde Bremsstege 42 zugeführt. Dies gewährleistet eine stabile Bewegung des Setzbolzens B durch den Fügekanal 20. Zudem ist das Dämpfungsverhalten der Federn 44 derart eingestellt, dass die Bremsstege 42 nicht soweit durch den Stoß des Setzbolzens B radial nach außen federn, dass sie den Kontakt zum Setzbolzen B verlieren. Auch auf diese Weise wird eine verbesserte Führung des Setzbolzens B im Fügekanal 20 gewährleistet. Gemäß einer weiteren bevorzugten Ausführungsform sind die Bremsstege mit einer progressiven Federkennlinie auslenkbar und gedämpft in ihre Ausgangsposition zurückstellbar. Daraus folgt, dass der ausgelenkte Bremssteg während seiner Bewegung eine zunehmende Federkraft als Gegenkraft erfährt. Die Rückstellung des Bremsstegs findet gedämpft statt, so dass der Bremssteg nicht sofort in den Fügekanal zurückfedert. Auf diese Weise wird die vom Setzbolzen durch den Bremssteg aufgenommene Energie verzögert an den Setzbolzen zurückgegeben. Das hier beschriebene Federverhalten wird vorzugsweise für alle in hier beschriebenen Federkonfigurationen realisiert, d.h. für die Federn oder O-Ringe in gleicher Weise wie für die mit einer Dämpfungsschicht abgefederten Kanalsegmente (siehe unten).

Eine bevorzugte Ausführungsform eines Setzgeräts 1 mit erfindungsgemäßen Kopfstück 3 ist in den Figuren 5 bis 9 dargestellt. Das Setzgerät 1 umfasst den Kanal 30, der hier als Abluftkanal genutzt wird. Mit dem Setzgerät 1 ist das Kopfstück 3 beispielsweise über eine Schraube S verbunden.

Das Kopfstück 3 besteht aus einem Mantelrohr 70, einem inneren Hohlzylinder 24, einer Mehrzahl von Bremsstegen 42, die mittels Federn 44 radial in den Fügekanal 20 federvorgespannt sind. Am Kopfstück 3 ist ein Druckluftanschluss 60 vorgesehen, der mit einer Druckluftquelle (nicht gezeigt) verbunden ist. Über den Druckluftanschluss 60 wird Luft einem Luftreservoir 68 und von dort über eine Mehrzahl von Druckluftkanälen 62 dem Fügekanal 20 zugeführt. Die Druckluftkanäle 62 sind vorzugsweise in Richtung des Setzgeräts 1 geneigt angeordnet, so dass die Luft auf das Setzgerät 1 zu in den Fügekanal 20 eingeblasen wird. Um das zwischen Hohlzylinder 24 und Mantelrohr 70 befindliche Luftreservoir 68 abzudichten, ist eine Dichtung 66 vorgesehen. Wird Druckluft mit einem einstellbaren Überdruck im Vergleich zum Atmosphärendruck in den Fügekanal 20 eingeblasen und strömt über den Kanal 30 ab, entsteht der positionierende Luftstrom L in Richtung der Stempelstirnseite 13. Dieser Luftstrom L positioniert den Setzbolzen B an der Stempelstirnseite 13, wie es oben bereits in Verbindung mit der Ansaugvorrichtung beschrieben worden ist.

Die Bremsstege 42 sind in längs gerichteten Nuten innerhalb des Hohlzylinders 24 angeordnet und ragen in den Fügekanal 20. Sie verfügen über eine Einführschräge an ihrem dem Setzgerät 1 zugewandten Ende. Diese Einführschräge erzeugt ein weiches Einlaufen des Setzbolzens B in die Bremsstrecke des Kopfstücks 3.

Die Bremsstege 42 sind bevorzugt über Stifte 46 befestigt, die senkrecht zur Längsachse des jeweiligen Bremsstegs 42 angeordnet und radial verschiebbar in einer Nut des Hohlzylinders 24 geführt sind. Zudem sind diese Stifte 46 nur in den beiden Endbereichen des jeweiligen Bremsstegs 42 angeordnet. Die Bremsstege 42 sind durch Federn 44 vorgespannt. Diese sind nicht über die Länge der Bremsstege 42 verteilt angeordnet, sondern zu Federpaketen zusammengefasst. Die Federpakete sind gleichmäßig voneinander beabstandet und es werden vorzugsweise drei Federpakete zur Vorspannung der Bremsstege 42 eingesetzt. Die Federn 44 bzw. die Federpakete werden zwischen dem Hohlzylinder 24 und dem Mantelrohr 70 gehalten und geklemmt. Auch die hier verwendeten Federn 44 weisen die bereits oben beschriebenen Federeigenschaften auf. Sie realisieren demnach ein gedämpftes Ausweichen der Bremsstege 42 und eine verzögerte Rückstellung der Bremsstege 42 in ihre Ausgangsposition. Dies wird durch die Verwendung von aus Gummi oder Kunststoff bestehenden O-Ringen als Federn 44 erzielt, die zwischen Hohlzylinder 24 und Mantelrohr 70 geklemmt befestigt sind. Durch das Mantelrohr 70 sind die Bremsleisten/O-Ringe in ihrer radialen Auslenkung begrenzt, ist. Zudem ist sichergestellt, dass die Bremsstege schnell und schwingungsgedämpft in den Fügekanal 20 zurückkehren und das Gesamtschwingen der Bremsstege minimiert ist. Mit Hilfe des Manterohrs erfolgt die Begrenzung der Auslenkbewegung mit geringem konstruktiven Aufwand, auf effektive Weise und ohne zeitliche Verzögerung.

Nicht erfindungsgemäße Ausführungsformen des Kopfstücks 3, die ebenfalls mit dem Setzgerät 1 einsetzbar sind, zeigen die Figuren 10 und 11, die Kopfstücke 3 der Figuren 10 und 11 sind optional mit der Ansaugvorrichtung und/oder den Druckluftkanälen 62 mit Druckluftquelle kombinierbar. Dadurch gewährleisten auch diese Kopfstücke 3 das oben beschriebene Positionieren sowie ein kontrolliertes Führen und Abbremsen des Setzbolzens B.

Das Kopfstück 3 der Figuren 10 und 11 mit Bremsstrecke 50 besteht aus einem Mantelrohr 70, das die äußere Einfassung des Kopfstücks 3 bildet. Der Fügekanal 20 wird durch einen inneren Hohlzylinder 24 gebildet, der aus einer Mehrzahl von Kanalsegmenten 26 aufgebaut ist. Durch die Unterbrechung des inneren Hohlzylinders 24 in Kanalsegmente 26 können diese radial nach außen ausweichen, wenn sie durch den Setzbolzen B belastet werden. Die Kanalsegmente 26 bestehen aus einem abriebfesten Material, wie beispielsweise Kunststoff, gehärteter Stahl oder Keramik. Dies gewährleistet einen geringen Verschleiß und eine verlässliche Führung des sich durch den Fügekanal 20 bewegenden Setzbolzens B.

Angrenzend an die Kanalsegmente 26 ist eine federnde Dämpfungsschicht 52 angeordnet. Die Dämpfungsschicht 52 dämpft eine Auslenkbewegung der Kanalsegmente 26 aufgrund der Setzbolzen-Bewegung und stellt das jeweilige Kanalsegment 26 verzögert in seine Ausgangsposition zurück. Ein passendes Material für die Dämpfungsschicht 52 ist beispielsweise ein Elastomer. Es sind jedoch auch andere Materialien geeignet, die die oben beschriebenen Dämpfungs- und Federeigenschaften aufweisen. Es ist weiterhin bevorzugt, die Dämpfungsschicht 52 mit einer progressiven Federkennlinie auszustatten, so dass das gewünschte gedämpfte Auslenken der Kanalsegmente sowie deren verzögerte Rückführung erfolgt, wie es oben im Zusammenhang mit den Federn beschrieben worden ist.

Zwischen dem Mantelrohr 70 und der Dämpfungsschicht 52 ist optional ein Hohlzylinder 54 angeordnet. Der Hohlzylinder 54 ist in dem Kopfstück 3 austauschbar, so dass Hohlzylinder 54 mit unterschiedlichen radialen Dicken einsetzbar sind. Auf dieser Grundlage ist die Vorspannung oder Kompression der Dämpfungsschicht 52 einstellbar und/oder nachstellbar. Die auf diese Weise federnd gedämpften Kanalsegmente 26 erfüllen somit die Funktion der oben beschriebenen Bremsstege 42. Aufgrund der im Fügekanal 20 befindlichen Flächen der Kanalsegmente 26 bieten sie größere Abstützflächen für den Setzbolzen B. Zudem wird eine flächige Energieeinleitung in die Dämpfungsschicht 52 bereitgestellt, wenn die Kanalsegmente 26 die seitlichen Bewegungen des Setzbolzens B abfangen. Dies gewährleistet ein weicheres Dämpfen des sich durch den Fügekanal 20 bewegenden Setzbolzens B.

Das mit dem beschriebenen Setzgeräten realisierte Verfahren zum Setzbolzensetzen lässt sich daher in folgenden Schritten zusammenfassen. Zunächst erfolgt ein loses Zuführen des Hilfsfügeteils B zum Fügekanal 20 des Setzgeräts 1. Danach wird ein zu positionierender Luftstrom entgegen der Fügerichtung des Hilfsfügeteils B im Fügekanal 20 mittels Ansaugen und/oder Zuführen von Luft erzeugt. Sobald dieser Luftstrom ausreichend stark ist, erfolgt ein Positionieren des Hilfsfügeteils B an der Stempelstirnseite 13 des Stempels 10. Wenn das Hilfsfügeteil B passend positioniert ist, wird der Fügevorgang gestartet und der Stempel 10 bewegt sich zum Fügen des Hilfsfügeteils B durch den Fügekanal 20 in Richtung des zu fügenden Bauteils.

## Patentansprüche

1. Kopfstück (3) für ein Setzgerät (1) mit einem Fügekanal (20), der sich in Längsrichtung des Kopfstücks (3) erstreckt, während das Kopfstück (3) die folgenden Merkmale aufweist:
a) einen inneren Hohlzylinder (24), in dem der Fügekanal (20) verläuft,
b) eine Mehrzahl von Bremsstegen (42), die bewegbar und federvorgespannt radial in den Fügekanal (20) ragen, und
c) eine Mehrzahl von Federn (44), die aus Kunststoff- oder Gummi-O-Ringen bestehen,
**gekennzeichnet durch**
d) ein Mantelrohr (70), das den inneren Hohlzylinder (24) derart umgibt, dass die Mehrzahl von Federn (44) zum Vorspannen der Bremsstege (42) zwischen Aussenwand das inneren-Hohlzylinders (22) und Mantelrohr (70) eingeklemmt sind.

2. Kopfstück (3) gemäß Anspruch 1, dessen innerer Hohlzylinder (24) eine Mehrzahl in den Fügekanal (20) mündender Kanäle (62) aufweist, die über das Mantelrohr (70) mit der Umgebung oder mit einer Druckluftquelle verbindbar sind.

3. Kopfstück (3) gemäß Anspruch 1, dessen Kanäle (62) angrenzend an ein Anschlussende zum Verbinden des Kopfstücks (3) mit einem Setzgerät (1) in den Fügekanal (20) münden.

4. Kopfstück (3) gemäß Anspruch 1 oder 2, das ein Anschlussende zum Verbinden mit einem Setzgerät (1) umfasst und dessen Bremsstege (42) jeweils in einer den inneren Hohlzylinder (24) durchlaufenden Längsnut angeordnet und dort über in den Endbereichen der Bremsstege (42) vorgesehene Stifte (46) befestigt sind.

5. Kopfstück (3) gemäß Anspruch 1, dessen Federn (44) derart konfiguriert sind, dass der Bremssteg (42) gedämpft auslenkbar und verzögert in seine Ausgangsposition zurückstellbar ist.

6. Kopfstück (3) gemäß Anspruch 1, dessen Federn (44) derart konfiguriert sind, dass der Bremssteg (42) mit einer progressiven Federkennlinie auslenkbar und gedämpft in seine Ausgangsposition zurückstellbar ist.

7. Kopfstück (3) gemäß Anspruch 5, in dem mehrere O-Ringe (44) zu Federpaketen zusammengefasst sind, so dass die Bremsstege (42) mit drei gleichmäßig beabstandeten Federpakten gehalten sind.

8. Setzgerät (1) für ein Hilfsfügeteil (B), insbesondere ein Setzbolzen oder ein Stanzniet, mit einem angetriebenen Stempel (10), der für eine Setzbewegung in einen Fügekanal (20) bewegbar ist, dem das Hilfsfügeteil (B) lose zuführbar ist, das ein Kopfstück gemäß einem der vorhergehenden Ansprüche aufweist.

9. Setzgerät (1) gemäß Anspruch 8, das die folgenden Merkmale aufweist:
eine Ansauganordnung mit einem Ansaugkanal (30), der angrenzend an die das Hilfsfügeteil (B) bewegende Stempelstirnseite (13) in den Fügekanal (20) des Setzgeräts (1) mündet, so dass im Fügekanal (20) über einen in der Ansaugvorrichtung generierbaren Unterdruck im Vergleich zum Atmosphärendruck ein Luftstrom in Richtung der das Hilfsfügeteil (B) bewegenden Stempelstirnseite (13) generierbar ist, mit dem das Hilfsfügeteil (B) an der Stempelstirnseite (13) positionierbar ist.

## Claims

1. A headpiece (3) for a setting device (1) having a joining channel (20) that extends in the longitudinal direction of the headpiece (3) while the headpiece (3) comprises the following features:
a) an inner hollow cylinder (24) in which the joining channel (20) runs,
b) a plurality of brake bars (42) that extend radially in a movable manner and under spring tension into the joining channel (20), and
c) a plurality of springs (44) consisting of plastic or rubber O-rings, **characterized by**
d) a tubular jacket (70) that surrounds the inner hollow cylinder (24) such that a plurality of springs (44) for pretensioning the brake bars (42) are clamped between the outer wall of the inner hollow cylinder (22) and the tubular jacket (70).

2. The headpiece (3) according to claim 1, with an inner hollow cylinder (24) that comprises a plurality of channels (62) which end in the joining channel (20) and are connectable by the tubular jacket (70) to the surroundings or to a compressed air source.

3. The headpiece (3) according to claim 1, with channels (62) that end in the joining channel (20) adjacent to a connecting end to connect the headpiece (3) to a setting device (1).

4. The headpiece (3) according to claim 1 or 2, comprising a connecting end for connecting to a setting device (1) and having brake bars (42) that are each arranged in a lengthwise groove running in the inner hollow cylinder (24) and are fastened there by means of pins (46) provided in the end areas of the brake bars (42).

5. The headpiece (3) according to claim 1, with springs (44) that are configured so that the brake bar (42) can be extended in a dampened manner and returned at a delay to its initial position.

6. The headpiece (3) according to claim 1, with springs (44) that are configured so that the brake bar (42) can be extended with a progressive spring characteristic and returned to its initial position in a dampened manner.

7. The headpiece (3) according to claim 5 in which a plurality of O-rings (44) are combined into spring assemblies so that the brake bars (42) can be held with three evenly spaced spring assemblies.

8. A device (1) for an auxiliary joining part (B), especially a setting bolt or punch rivet with a driven punch (10), that can be moved for a setting movement in a joining channel (20) to which an auxiliary joining part (B) can be loosely supplied that has a headpiece according to one of the prior claims.

9. The setting device (1) according to claim 8 having the following features:
a suction arrangement having a suction channel (30) that ends in the joining channel (20) of the setting device (1) neighboring the punch face (13) moving the auxiliary joining part (B) so that a flow of air can be generated in the direction of the punch face (13) moving the auxiliary joining part (B) in the joining channel (20) by means of a vacuum generatable in the suction device in comparison to the atmospheric pressure by means of which the auxiliary joining part (B) can be positioned on the punch face (13).

## Revendications

1. Embout (3) pour un appareil de pose (1) avec un canal d'assemblage (20) qui s'étend dans la direction longitudinale de l'embout (3) tandis que l'embout (3) présente les caractéristiques suivantes :
a) un cylindre creux (24) intérieur dans lequel se trouve le canal d'assemblage (20),
b) une pluralité d'entretoises de freinage (42) qui pénètrent de façon mobile et précontrainte par ressort radialement dans le canal d'assemblage (20), et
c) une pluralité de ressorts (44) qui sont constitués de joints toriques en matière plastique ou en caoutchouc,
**caractérisé par**
d) un tube de gainage (70) qui entoure le cylindre creux (24) intérieur de sorte que la pluralité de ressorts (44) sont serrés pour le serrage préliminaire des entretoises de freinage (42) entre paroi extérieure du cylindre creux (22) intérieur et tube de gainage (70).

2. Embout (3) selon la revendication 1, dont le cylindre creux (24) intérieur présente une pluralité de canaux (62) qui débouchent dans le canal d'assemblage (20) et qui peuvent être raccordés, par le biais du tube de gainage (70), à l'environnement ou à une source d'air comprimé.

3. Embout (3) selon la revendication 1, dont les canaux (62) débouchent dans le canal d'assemblage (20) de façon adjacente à une extrémité de raccordement pour le raccordement de l'embout (3) à un appareil de pose (1).

4. Embout (3) selon la revendication 1 ou 2, qui comprend une extrémité de raccordement pour le raccordement à un appareil de pose (1) et dont les entretoises de freinage (42) sont respectivement disposées dans une rainure longitudinale traversant le cylindre creux (24) intérieur et y sont fixées par le biais de broches (46) qui sont prévues dans les zones extrêmes des entretoises de freinage (42).

5. Embout (3) selon la revendication 1, dont les ressorts (44) sont configurés de sorte que l'entretoise de freinage (42) peut être déviée de façon amortie et rappelée de façon temporisée dans sa position initiale.

6. Embout (3) selon la revendication 1, dont les ressorts (44) sont configurés de sorte que l'entretoise de freinage (42) peut être déviée avec une courbe caractéristique de ressort progressive et peut être rappelée de façon amortie dans sa position initiale.

7. Embout (3) selon la revendication 5, dans lequel plusieurs joints toriques (44) sont réunis en blocs-ressorts de sorte que les entretoises de freinage (42) sont retenues avec trois blocs-ressorts espacés régulièrement.

8. Appareil de pose (1) pour une partie d'assemblage auxiliaire (B), en particulier un boulon de pose ou un rivet auto-poinçonneur, avec un poinçon (10) entraîné qui est mobile pour un mouvement de pose dans un canal d'assemblage (20) auquel la partie d'assemblage auxiliaire (B) peut être conduite de façon lâche, qui présente un embout selon une des revendications précédentes.

9. Appareil de pose (1) selon la revendication 8, qui présente les caractéristiques suivantes :
un dispositif d'aspiration avec un canal d'aspiration (30) qui débouche dans le canal d'assemblage (20) de l'appareil de pose (1) de façon adjacente au côté frontal de poinçon (13) qui déplace la partie d'assemblage auxiliaire (B), de sorte que, dans le canal d'assemblage (20), par le biais d'une dépression, par comparaison avec la pression atmosphérique, qui peut être générée dans le dispositif d'aspiration, un flux d'air peut être généré en direction du côté frontal de poinçon (13) déplaçant la partie d'assemblage auxiliaire (B) et peut positionner la partie d'assemblage auxiliaire (B) sur le côté frontal de poinçon (13).
